Europäisches Patentamt

European Patent Office

Office européen des brevets

(19)

(11) Publication number : **0 520 926 A2**

# (12) EUROPEAN PATENT APPLICATION

(21) Application number : **92480081.6**

(22) Date of filing : **10.06.92**

(51) Int. Cl.⁵ : **G06F 9/44**

(30) Priority : **28.06.91 US 722999**

(43) Date of publication of application :
**30.12.92 Bulletin 92/53**

(84) Designated Contracting States :
**DE FR GB**

(71) Applicant : **International Business Machines
Corporation
Old Orchard Road
Armonk, N.Y. 10504 (US)**

(72) Inventor : **Chandler-Miller, Patrice R.
986 Quail Ridge
Keller, TX 76248 (US)**
Inventor : **Miller, Wade A.
986 Quail Ridge
Keller, TX 76248 (US)**
Inventor : **Rayborn, John K.
5631 Southwestern Boulevard
Dallas, TX 75209 (US)**

(74) Representative : **de Pena, Alain
Compagnie IBM France Département de
Propriété Intellectuelle
F-06610 La Gaude (FR)**

(54) Method and apparatus for managing class information.

(57) A method and apparatus in an object-oriented software development tool kit for providing class information to an application in an object-oriented environment that requests class information from a graphic user interface operating environment. When a request is received for class information from an application, a search of a class data structure is performed for a presence of class information. If the class information is present, the class information is retrieved. If no class information is present in the class data structure, the information is requested and received from the graphic user interface operating environment and saved in the class data structure. Finally, the class information is sent to the application.

Fig. 1

## BACKGROUND OF THE INVENTION

### 1. Field of the Invention:

The present invention relates in general to an object-oriented development tool kit component for aiding in developing applications for use with a graphic user interface operating environment that is operating in a nonobject-oriented environment, and in particular to a method for accessing class information from the graphic user interface operating environment outside of the object-oriented environment. Still more particularly, the present invention relates to a method for accessing class information from a graphic user interface operating environment outside of the object-oriented environment by eliminating the need for a developer of object-oriented applications to understand and use program calls specific to the operating environment and developing applications for use with the operating environment.

### 2. Description of the Prior Art:

Object-oriented languages confer the benefits of extendibility and reusable code, but in an object-oriented environment, situations exist in which operations such as accessing data outside the environment, sending information outside of the environment, or other programming calls to applications or operating systems outside of the environment may be desirable. At this point in time, graphic user interface operating environments not in an object-oriented environment are being developed in which application developers desire to create applications for use with these operating environments.

In some situations, an application developer may be programming in an object-oriented language. In such a case, it is necessary to perform operations both inside and outside the object-oriented environment. One operating environment is an end user interface which is an operating environment using the methodology, including devices, by which an end user interacts with the operating environment, an application in the environment. A graphic user interface ("GUI") operating environment is an end user environment that is graphical. For example, the end user interacts with the environment via windows, icons, menus, pointing devices, etc.

Presently, persons writing applications in an object-oriented language for GUI operating environments must include in their applications C code and/or application programming interface ("API") calls. The use of C language or API calls and the retraining issues for programmers and developers trained in object-oriented languages are extremely costly.

Applications may be built using objects. In an object-oriented environment, an object consists of related pieces of code and data. An object has a library of methods which are essentially unique to an object giving the object its specific behaviors. The class of an object defines a grouping based on one or more properties, and an instance as a single item in a class. For example, a class of an object could be considered as analogous to professions, i.e., lawyers, doctors, engineers, and programmers, with an instance of an object being analogous to a particular individual in a class.

A class defines methods for constructing new instances and also instance methods which define how an instance behaves and reacts to incoming messages. The instance variables define the particular features of an instance object such as an individual's salary. The instance variables may be defined or may be empty awaiting definition. An instance's data structure is described by its collection of instance variables. Applications in object-oriented environments may be divided into three basic components: models, view, and controllers. Model objects are the components of the application that does the work; i.e., manipulate data. Next, view objects handle all graphical aspects; i.e., screen presentation. The controller objects make up the interface between model objects, view objects, and input devices (e.g., keyboard or pointing device). In other words, the controller objects deals with user input device interactions.

Some GUI operating environments, such as Office Vision/2, a product of International Business Machines Corporation, are not created using an object-oriented language. Presently in such a situation, the only development option available to developers for creating applications for use with such an operating environment has been to create applications using C language, Presentation Manager, and Office Vision/2 Application Programming Interfaces.

In writing applications for a GUI operating environment, class information is often required and requested from the operating environment so that the application knows how to treat a particular item. The term "item" is intended to cover any object type that an operating environment would need class information on to recognize the item for use with the environment. Thus, items would include, for example, applications, data files, spreadsheets, and/or graphics files.

Generally, when applications or other items are to be used with a GUI operating environment, a process called registration is followed. Generally registration of an item involves giving class information or defining the item's class to the operating environment and its applications for use. Class information is all the information that defines the class of an item to an operating system. The class information is used in the registration process to define that item to the operating environment and its applications. Manipulation and use of an item or other items in the same class is enabled by supplying class information on the item's class during the registration process. More specifically, in registering applications or other items, class information is given to tell the operating system what to expect from a particular type of item or the item's class. Class information for an item type may include, for example, the format expected, parameters for information, the name of the class, data files associated with the item, what icon to display, the name displayed with the icon, and the name of the item's dynamic link library. The class information that is necessary or required for registration of an item type may vary from operating environment to operating environment.

Since an application developed for a graphic user interface operating environment will require class information from the operating environment, it should therefore be apparent that a method and apparatus is needed for developers programming in object-oriented languages in which the use of another language or learning specific application program interface calls and the retraining involved would be eliminated.

## SUMMARY OF THE INVENTION

It is therefore one object of the present invention to provide an object-oriented development tool kit component for aiding in developing applications for use with a GUI operating environment that is operating in a nonobject-oriented environment.

It is another object of the present invention to provide a method for accessing class information from the GUI operating environment outside of the object-oriented environment.

It is yet another object of the present invention to provide a method for accessing class information from a GUI operating environment outside of the object-oriented environment which eliminates the need for a developer of object-oriented applications to understand and use program calls specific to the operating environment and developing applications for use with the operating environment.

Additional objects, features, and advantages will be apparent in the written description which follows. The method and apparatus of the present invention includes a method in an object-oriented software system that provides class information to an application in an object-oriented environment that requests class information from a graphic user interface operating environment. The class manager receives a request message for class information from the application in the object-oriented environment and searches a class data structure for class information requested by the request message. If the class information requested by the application is present in the class data structure, class information requested by the request message is retrieved from the class data structure. If the class information requested by the application is absent from the class data structure, the class information requested by the application is retrieved from the graphic user interface operating environment; the class information returned by the graphic user interface operating environment is then saved in the class data structure. Finally, the class information requested by the application is sent to the application.

The above as well as additional objects, features, and advantages of the invention will become apparent in the following detailed description.

## BRIEF DESCRIPTION OF THE DRAWINGS

The novel features believed characteristic of the invention are set forth in the appended claims. The invention itself however, as well as a preferred mode of use, further objects and advantages thereof, will best be understood by reference to the following detailed description of an illustrative embodiment when read in conjunction with the accompanying drawings, wherein:

Figure 1 depicts a pictorial representation of a distributed data processing system which may be utilized to implement the method of the present invention;

Figure 2 is a diagram depicting a method of retrieving class data in accordance with the present invention; and

Figure 3 is a high level flowchart showing the method of accessing class information under the present invention.

## DETAILED DESCRIPTION OF THE PREFERRED EMBODIMENT

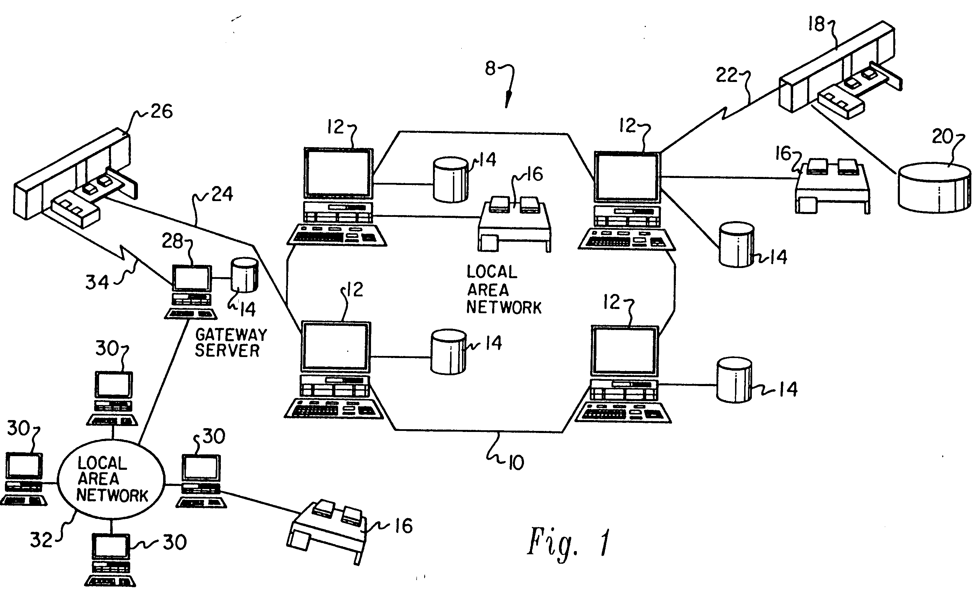

With reference now to the figures, and in particular with reference to Figure 1, there is depicted a pictorial representation of a data processing system 8 which may be utilized to implement the method of the present invention. As may be seen, data processing system 8 may include a plurality of networks, such as Local Area

3

Networks (LAN) 10 and 32, each of which preferably includes a plurality of individual computers 12 and 30, respectively. Of course, those skilled in the art will appreciate that a plurality of Intelligent Work Stations (IWS) coupled to a host processor may be utilized for each such network.

As is common in such data processing systems, each individual computer may be coupled to a storage device 14 and/or a printer/output device 16. One or more such storage devices 14 may be utilized, in accordance with the method of the present invention, to store documents or resource objects which may be periodically accessed by any user within data processing system 8. In a manner well known in the prior art, each such document or resource object stored within a storage device 14 may be freely interchanged throughout data processing system 8 by transferring a document to a user at an individual computer 12 or 32, for example.

Still referring to Figure 1, it may be seen that data processing network 8 may also include multiple mainframe computers, such as mainframe computer 18, which may be preferably coupled to Local Area Network (LAN) 10 by means of communications link 22. Main frame computer 18 may also be coupled to a storage device 20 which may serve as remote storage for Local Area Network (LAN) 10. Similarly, Local Area Network (LAN) 10 may be coupled via communications link 24 through a subsystem control unit/communications controller 26 and communications link 34 to a gateway server 28. Gateway server 28 is preferably an individual computer or Interactive Work Station (IWS) which serves to link Local Area Network (LAN) 32 to Local Area Network (LAN) 10.

As discussed above with respect to Local Area Network (LAN) 32 and Local Area Network (LAN) 10, a plurality of documents or resource objects may be stored within storage device 20 and controlled by main frame computer 18, as Resource Manager or Library Service for the resource objects thus stored. Of course, those skilled in the art will appreciate that main frame computer 18 may be located a great geographic distance from Local Area Network (LAN) 10 and similarly Local Area Network (LAN) 10 may be located a substantial distance from Local Area Network (LAN) 32. For example, Local Area Network (LAN) 32 may be located in California while Local Area Network (LAN) 10 may be located within Texas and main frame computer 18 may be located in New York.

A GUI operating environment may be found on individual computers 12 and 30, on gateway server 28, on some computer in LAN 10 or 32, or on mainframe computer 18. The GUI operating environment may not be an object-oriented environment. Individuals may use a GUI operating environment as a stand alone on their individual computers or may use a graphic user interface operating environment as a user on a LAN.

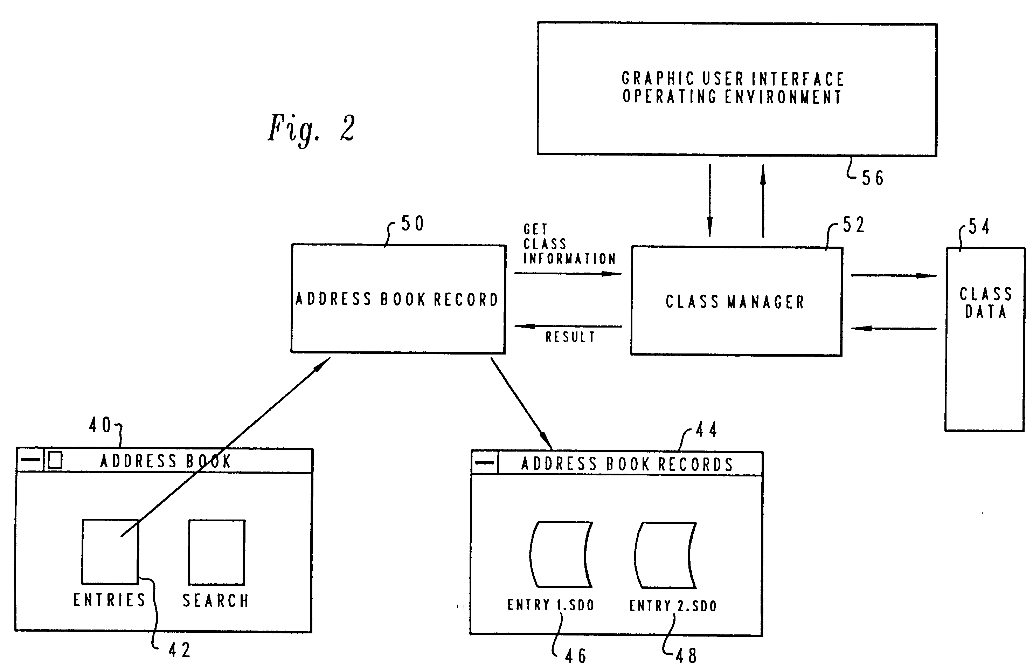

Referring now to Figure 2, a diagram depicting a method of accessing class information in accordance with the present invention is depicted. As illustrated, a distributed data processing system 8 is depicted as including an object-oriented environment containing an Address Book window 40 and a GUI operating system. One such GUI operating system which would be suitable for use with a preferred embodiment of the present invention is Office Vision/2, a product of International Business Machines Corporation. Smalltalk/V PM, a product of Digitalk, Inc., is an object-oriented environment used in a preferred embodiment of the invention.

The Address Book window 40 is an object within the object-oriented environment as part of an application. When a user selects the entries icon 42, an Address Book Records window 44 is opened. The Address Book Records window 44 contains Address Book entries 46 and 48. Entries 46 and 48 are in the same class.

The user of Address Book window 40 does not see the interaction between the application, Address Book Record 50, the class manager 52, the class data structure 52, and the GUI operating environment 56. Address Book Record 50 sends a message requesting class information to class manager 52. First, class manager 52 searches class data structure 54 for class information corresponding to the request from Address Book Record 50. Class data structure 54 is located in an object-oriented memory location in memory. If the requested class information is found in class data structure 54 the information is retrieved by class manager 52 and sent to Address Book Record 50. This class information includes information needed to determine what icon to present for each entry 46 and 48 located in Address Book Records window 44.

When class information corresponding to a request is not found in class data structure 54, class manager 52 translates the request into a query that is sent to GUI operating environment 56 which is located outside of the object-oriented environment. This step may involve translating the request into application program interface calls specific to the GUI operating environment and sending these calls to the GUI operating environment. More specifically, the class manager 52 sends a request to a Dynamic Link Library object which translates the request into an appropriate API call to the appropriate routine for accessing class information. More information on dynamic link libraries and API calls may be found in La-Garde et al., IBM Operating System/2 Version 1.2 Programming Guide , International Business Machines Corporation, Document No. 00F8833, 1989. Class manager 52 also receives the class information resulting from the query and either translates the results into a format for use by Address Book Record 50 or sends the results directly to Address Book Record 50. In addition to returning the results to Address Book Record 50, class manager 52 saves the requested class information in class data structure 54.

Thus, if class information is required for an entry that has a class identical to an entry requested previously, class manager 52 only needs to search class data structure 54 for the requested class information, saving time compared to using a conventional programming language to make repeated requests to the GUI operating environment. As a result, exiting the object-oriented environment to retrieve information is not necessary, resulting in increased performance.

Class data structure 54 is a section of memory in the object-oriented environment. When using a GUI operating environment such as Office Vision/2, class information stored in the class data structure includes such information as template names, template data files, icons to be used for the particular item's class, the working directory, and other parameters.

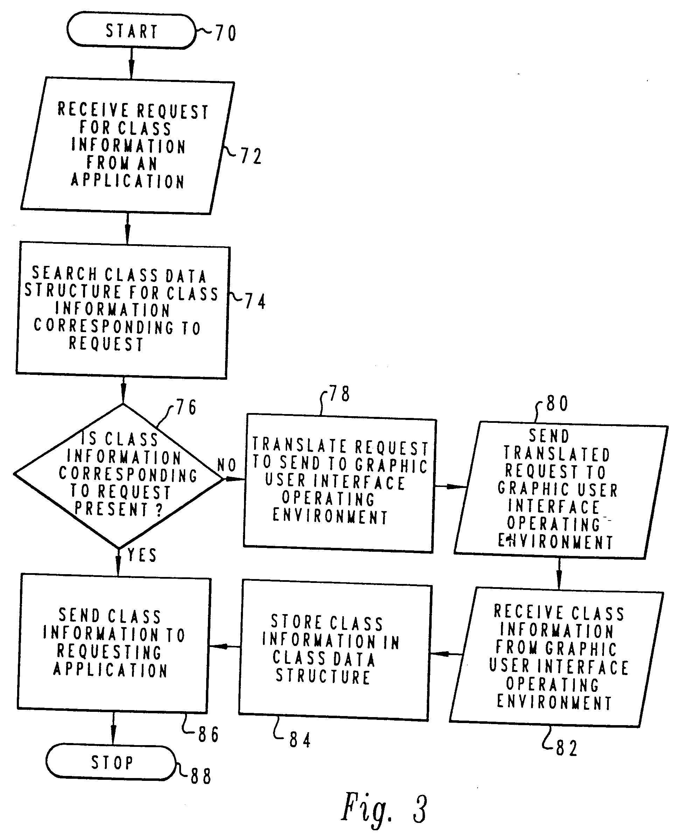

Figure 3 is a high level flowchart showing a method of accessing class information under a preferred embodiment of the invention. As illustrated, the process begins at block 70 and thereafter passes to block 72 which illustrates the receiving of a request from an application. Next, in block 74 a search of the class data structure 54 is made for class information corresponding to the request. Next, block 76 illustrates a determination of whether a search of the class data structure resulted in class information corresponding to the request.

If no class data information corresponding to the request is found in the search of the class data structure, as determined in block 76, then the process passes to block 78 which illustrates translating the request into application program interface calls or some other call specific to the graphic user interface operating system and block 80 depicts sending the request to a GUI operating environment. Thereafter, block 82 depicts receiving class information corresponding to the request received from an application. The class information is received in a raw form. When the class manager receives the class information, the class manager converts this raw data to an object-oriented structure or form for use by the application. The raw data may also be converted to an object-oriented structure or form by some other object.

Next, block 84 shows updating the class data structure by storing the class information returned by the GUI operating environment in response to the request sent in block 80. After converting the class information from the GUI operating environment, the class information may be further converted into a format specified or required by the application requesting class information, or the class information may be sent directly to the application without any further modification. The process proceeds to block 86 in which the class information corresponding to the request is sent to the application. The illustrated process then terminates, as shown in block 88.

Referring again to block 76, in the event the search performed in block 74 results in class information corresponding to the request being present in the class data structure, the process then proceeds to block 86 with the class information being sent to the application. Thereafter the process terminates in block 88.

The method of accessing class information may be incorporated as part of an application that requires class information. Thus, the present invention allows developers to create applications that access and manage class information from GUI operating environments. The description of the steps in the present invention may be provided as a tool kit component for aiding in developing applications for use with GUI operating environments. In another embodiment, the methods in the present invention may be implemented into a computer program for integrating object-oriented programs with GUI operating environments by providing access to class information.

The following is an example of pseudo code involving an application A ("APP A") requesting class information for items in a class having an extension of ".SDO" from a class manager ("CM"). In this example, Office Vision/2 is the GUI operating environment. All items in this class or item type have the extension ".SDO":

```
APP A:    Query class manager for class information for class '.SDO'.
CM:       Check class structure data to see if '.SDO' already queried.
              If true, return '.SDO' class information to APP A.
              If false, build structures to make API call to OV/2, make API call to OV/2 for class information
              for '.SDO', build object-oriented dictionary from structures returned by OV/2, store dictionary in class
              data structure, and return '.SDO' class information to APP A.
```

Although the invention has been described with reference to a specific embodiment, this description is not meant to be construed in a limiting sense. Various modifications of the disclosed embodiment as well as alternative embodiments of the invention will become apparent to persons skilled in the art upon reference to the description of the invention. It is therefore contemplated that the appended claims will cover any such modifications or embodiments that fall within the true scope of the invention.

## Claims

1.    A method in an object-oriented software system for providing class information to an application in an object-oriented environment that requests class information from a graphic user interface operating environment comprising:

receiving a request for class information from said application in said object-oriented environment;

searching a class data structure for a presence of class information requested by said request;

if class information requested by said application is present in said class data structure, retrieving class information requested by said request from said class data structure;

if class information requested by said application is absent from said class data structure, requesting and receiving class information requested by said application from said graphic user interface operating environment and saving class information received from graphic user interface operating environment in said class data structure; and

sending class information requested by said application to said application.

2. The method of Claim 1 wherein said class data structure is located in an object-oriented memory location in a memory.

3. The method of Claim 1 wherein said graphic user interface operating environment is not an object-oriented environment.

4. The method of Claim 1 wherein the requesting step comprises translating said request into application program interface calls specific to said graphic user interface operating environment and sending application program interface calls to said graphic user interface operating environment.

5. The method of Claim 1 wherein the receiving step comprises converting class information received from said graphic user interface operating environment into a format specified by said application requesting class information.

6. The method of Claim 1 wherein said method is incorporated into an application requiring class information from a graphic user interface operating environment.

7. The method of Claim 1 wherein said class information includes an icon associated with an item.

8. A class manager tool kit component for accessing class information from a graphic user interface operating environment comprising:

means for receiving a query sent by an application requesting class information;

means for searching a class data structure located in said object-oriented environment for the presence of class information corresponding to said query;

means for retrieving class information from said class data structure if class information corresponding to said query is found in said class data structure;

means for relaying said query to said graphic user interface operating environment, receiving class information from said graphic user interface operating environment in response to relaying query, and saving said class information returned by graphic user interface operating environment in said class data structure, said means utilized when class information is present in said class data structure; and

means for sending said class information corresponding to said query to said application.

9. The class manager of Claim 9 wherein said class manager is a component in an object-oriented software development tool kit for aiding in the development of object-oriented applications for use in said graphic user interface operating environment.

10. A computer program for integrating object-oriented programs with graphic user interface operating environments by providing access to class information, comprising:

means receiving a request for class information;

means for causing a search to be performed on a class data structure for a presence of class corresponding to said request;

means for retrieving class information from said class data structure responsive to a presence of class information in said class data structure corresponding to said request;

means for retrieving said class information from a graphic user interface operating environment and saving class information in said class data structure responsive to an absence of class information in said class data structure corresponding to said request; and

means for sending class information to said application.

*Fig. 1*

Fig. 2

54 CLASS DATA

56 GRAPHIC USER INTERFACE OPERATING ENVIRONMENT

52 CLASS MANAGER

GET CLASS INFORMATION

RESULT

50 ADDRESS BOOK RECORD

44 ADDRESS BOOK RECORDS

46 ENTRY 1.SDO

48 ENTRY 2.SDO

40 ADDRESS BOOK

42 ENTRIES

SEARCH

8

START —70

RECEIVE REQUEST
FOR CLASS
INFORMATION
FROM AN
APPLICATION —72

SEARCH CLASS DATA
STRUCTURE FOR CLASS
INFORMATION
CORRESPONDING TO
REQUEST —74

76
IS CLASS
INFORMATION
CORRESPONDING
TO REQUEST
PRESENT ?

NO → TRANSLATE REQUEST
TO SEND TO GRAPHIC
USER INTERFACE
OPERATING
ENVIRONMENT —78

→ SEND
TRANSLATED
REQUEST TO
GRAPHIC USER
INTERFACE
OPERATING
ENVIRONMENT —80

YES

SEND CLASS
INFORMATION TO
REQUESTING
APPLICATION —86

← STORE CLASS
INFORMATION IN
CLASS DATA
STRUCTURE —84

← RECEIVE CLASS
INFORMATION
FROM GRAPHIC
USER INTERFACE
OPERATING
ENVIRONMENT —82

STOP —88

*Fig. 3*